Europäisches Patentamt

European Patent Office

Office européen des brevets

(19)

(11) Publication number : **0 390 232 B1**

(12) # EUROPEAN PATENT SPECIFICATION

(45) Date of publication of patent specification :
30.09.92 Bulletin 92/40

(51) Int. Cl.[5] : **G01M 3/10**

(21) Application number : **90200274.0**

(22) Date of filing : **06.02.90**

(54) **Process for checking the tightness of a casing, and device for carrying out said process.**

(30) Priority : **07.02.89 NL 8900301**

(43) Date of publication of application :
**03.10.90 Bulletin 90/40**

(45) Publication of the grant of the patent :
**30.09.92 Bulletin 92/40**

(84) Designated Contracting States :
**AT BE CH DE DK ES FR GB GR IT LI LU NL SE**

(56) References cited :
**FR-A- 1 495 004**
**PATENT ABSTRACTS OF JAPAN, vol. 6, no.**
**237 (P-157)[1115], 25th November 1982; &**
**JP-A-57 137 836 (HITACHI SEISAKUSHO**
**K.K.)25-08-1982**
**PATENT ABSTRACTS OF JAPAN, vol. 9, no.**
**199 (P-380)[1922], 16th August 1985; & JP-A-60**
**63 438 (NICHIEI BOUEKI K.K.)11-04-1985**

(56) References cited :
**SOVIET INVENTIONS ILLUSTRATED DER-**
**WENT, week K32, 21st September 1983, Der-**
**went Publications Ltd, London, GB; &**
**SU-A-966516 (AS BELO APPL. PHYS.) 15-**
**10-1982**

(73) Proprietor : **WUBS TECHNOLOGIE B.V.**
**16, Zuiddijk**
**NL-5705 CS Helmond (NL)**

(72) Inventor : **Wubs, Klaas**
**7, Bosrand**
**NL-5721 AW Asten (NL)**
Inventor : **Walraven, Adriaan**
**22, Prinses Margrietlaan**
**NL-6951 AK Dieren (NL)**

(74) Representative : **Timmers, Cornelis Herman**
**Johannes et al**
**EXTERPATENT B.V. P.O. Box 3241**
**NL-2280 GE Rijswijk (NL)**

## Description

The invention relates to a process of leak detection by detecting vibrations generated by bubbles escaping from a leak in an object submerged in a liquid, and a device for carrying out said process according to the preamble of Claim 2. Method and device are known from practice.

Checking the tightness of a casing for a medium, in particular for a liquid medium, such as a heating radiator, an element of a heat exchanger, an evaporator of a cooling plant, or a petrol or oil tank, is in particular when a number of such casings have to be checked in series, a problem for which no satisfactory solution has yet been found, In general, such a check is carried out by temporarily filling the casing with a gaseous medium, in particular compressed air, subsequently immersing it in a liquid medium such as water, and observing whether gas bubbles rise out of the container. Not only does such a check require the constant presence and attention of an observer, but it has also been found in practice that not all leaks are detected with absolute certainty, in particular due to the slackening of attention on the part of the observer.

The object of the invention is to eliminate this drawback and provide a process and device of the above-mentioned kind with which all leaks present are detected with absolute certainty.

This object is achieved by the measures described in the characterizing part of Claim 1 and with a device as described in the characterizing part of Claim 2.

It has been found in practice that the vibrations, which arise from the escape of gas bubbles from a leak and their bursting on the liquid medium surface, and which are transmitted through this medium up to the wall of the container, can set this wall in vibration in such a way that certain detection of such vibrations, and thus also of a leak, is possible. The fact that the vibration sensor need not be fixed to the wall in the medium but outside the medium, is in practice a great advantage, since this makes the choice of sensor considerably easier and gives the possibility of using very sensitive sensors which do not have to be insulated against moisture.

The use of band-pass filters placed in the path of the signal supplied by the vibration sensor in combination with the insulation of the interior of the chamber for sound and vibrations with frequencies, relevant for detecting the leak, makes the device in a high degree insensitive for external disturbances and thus increases the sensitivity considerable.

Preferred embodiments of the device according to the invention are described in Claims 3-9.

It is observed that testing the housing of a semiconductor component as to tightness by submerging the same in a hot liquid and acoustically detecting the gasbubbles, escaping by the overpressure therein, is known in itself from JP-A-57137836 (Patent Abstract of Japan, vol. 6, no. 237 (P157) [1115]). A similar principle, in which the casing is brought under overpressure via an external source and the sound generated by the escaping airbubbles is detected by a hydrofone is described in SU-A-966 516. US-A-2 961 869 describes the use of amplifier- and filtercircuits in a leak detection device which is based on a completely different principle, namely: emitting high frequency vibrations in a container filled with liquid in which the casing to be tested is placed and detecting vibrations reflected by emerging gasbubbles.

It is pointed out that the process and device according to the invention can be used not only in conjunction with casings which are filled with a gaseous medium solely for checking the tightness, but also for those casings which are normally under a certain excess pressure from a gaseous medium. One thinks here for instance of packs for foodstuffs or luxury items such as crisps, snacks, chocolate products and ready salads.

The invention is explained with reference to the drawing, in which:

Fig. 1 is a schematic view of a device according to the invention;

Fig. 2 shows schematically a plant in which such a device is used;

Fig. 3 shows schematically a part of a production line for radiators in which the plant according to Fig. 2 is accommodated.

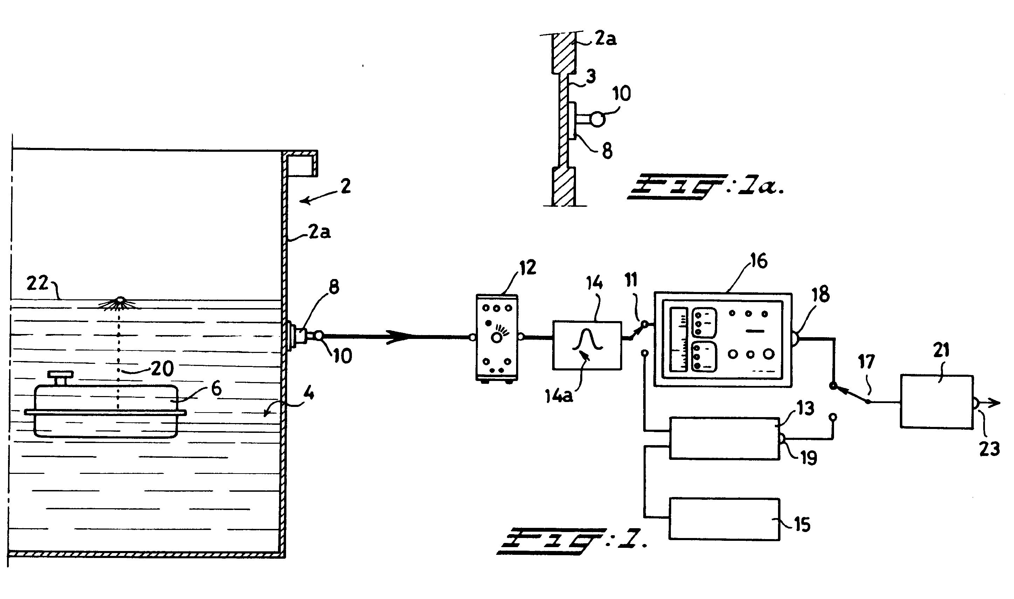

Fig. 1 indicates by reference number 2 a container which is partially filled with a liquid medium 4, for example water, and in which a casing 6, whose tightness is to be checked, is immersed. Prior to the immersion, the casing 6 is filled with a compressed medium, for example air. Fixed on the wall 2a of the container 2 is a vibration-sensitive sensor 8, for example a piezoelectric sensor which delivers electrical output signals to the connection 10 whose amplitude and frequency correspond to those of the vibrations picked up by said sensor. Figure 1a shows a preferred way of positioning the piezo-electric sensor according to which this sensor 8 is fixed to a thinner wall part 3 in the wall 2a. The fixing can be done in any suitable way, for instance by gluing or by means of mechanical fastening elements. The electrical signals are fed to an amplification stage 12, the output of which is connected to an adjustable band-pass filter which by means of the selector switch 14a can be set at central frequencies of approximately 2, 4 and 8 KHz; the passed signals are fed to an evaluation circuit by means of a two-position switch 11.

This evaluating circuit can comprise a monitor 16 with output terminal 18 which is connected with the uppermost terminal of the two-position switch 17. By means of this monitor one observes whether or not the signal at its input which, as said, represents the vibrations detected by the sensor 8 exceeds the background noise signal with a certain amount, for instance 10 dB. This observing can be done visually but the monitor 18 can also be constructed in such a way that its output terminal 18 carries a signal of predetermined amplitude and shape when this condition is met.

However, the evaluating circuit can also be based on comparing as to wave form and amplitude the measuring signal, as this occurs at the input terminal of the switch 18 with a reference signal which is obtained by positioning in the container 2 a casing with a predetermined, known leak and by recording, for instance magnetically or optically, the signal which then arises. Reference numeral 15 schematically shows such a reference signal source which generates this recorded reference signal and its outputsignal is supplied to the comparing circuit 13 to which in the lower position of the switch 11 also the measuring signal is supplied; when there is coincidence - which points to the presence of a leak - the output 19 of the comparing circuit carries a signal which indicates the presence of a leak.

The outputsignals of monitor 16 and comparing circuit 13 respectively are supplied via the two-position switch 17 to a controlcircuit 21 of which the signal, present at its output terminal 23, determines the destination of the leaking casing in a way which will be described later on.

If the casing 6 shows a leak, a stream of air bubbles 20 will rise from it and burst apart at the surface 22 of the medium 4. The vibrations caused by the escape and bursting are transmitted to the wall 2a of the container 2 and thus also to the vibration sensor 8. It has been found that major leaks, resulting in large gas bubbles, cause vibration frequencies which are considerably lower than the vibration frequencies caused by very small leaks, and through the correct selection of the pass-band of the filter 14 both large and very small leaks can be detected with great accuracy.

Leaks in a very great variety of casings can be detected in this way; for example, heating radiators, heat exchangers, fuel tanks, etc., but also in considerably smaller casings filled under excess pressure, such as packs filled under excess pressure for foodstuffs and luxury products such as, for example, crisps.

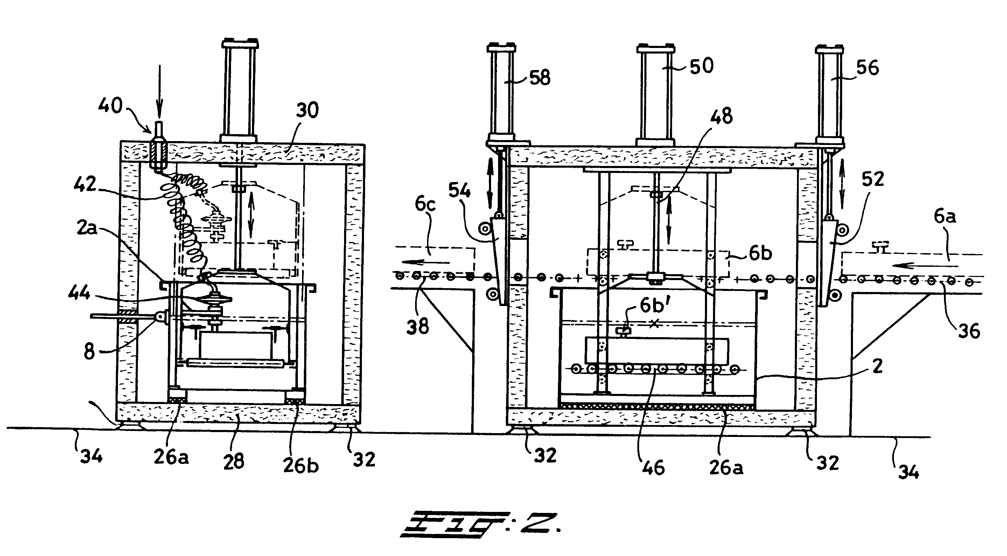

Process and device according to the invention are particularly suitable for use in a continuous testing process, to be carried out at the end of a production line. This is shown schematically for radiators in Fig. 2,

Fig. 2 shows how the container 2 is placed on vibration insulators 26a, 26b on the bottom 28 of a sound-insulated chamber which itself rests by means of a suitable number of vibration insulators on a foundation 34. As shown for the radiator 6a, the radiators to be tested are conveyed in on a feed belt 36, subsequently tested (as indicated for the radiator 6b), and discharged onto a discharge belt 38, as indicated for the radiator 6c. Of course, these radiators can be placed under excess pressure outside the test chamber, prior to immersion in the container 2, and then shut off, but it is also possible to connect each radiator to be tested, after it has passed into the test chamber, to a compressed air source of the type shown schematically by the compressed air connection 40, the hose 42 and the reducing valve with connection 44. A roller track part 46, connected by suitable suspension means to the control rod 48 of a hydraulic or pneumatic working cylinder 50 is used to lower the radiators for testing into the container 2 and remove them therefrom. Shut-off doors 52, 54 which can be moved up and down in the vertical direction, and which are suspended from the working cylinders 56, 58, complete the plant.

The testing process is simple: after the placing of a radiator, such as the radiator 6b, in the test chamber, the connection between reducing valve 44 and the connection branch 6b' of the radiator 6b is made, following which the doors 52 and 54 are closed, and the signals delivered by the vibration sensor 8 are picked up and evaluated. On completion of the test the doors 52 and 54 are opened, the connection to the branch 6b' is released, the radiator 6b is removed from the chamber, and a new radiator is fed into the chamber.

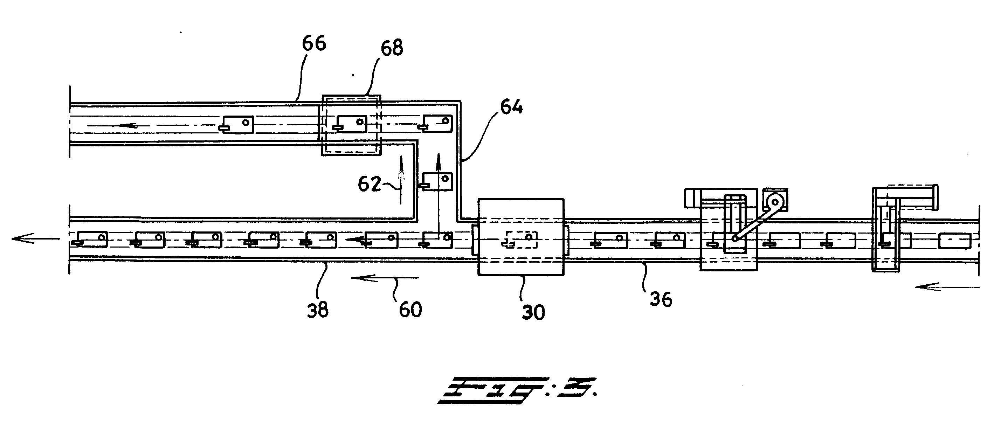

Fig. 3 shows how such a plant can be installed in a simple manner at the end of a production line for radiators. The chamber 30 is provided between the feed conveyor 36 and the discharge conveyor 38; if the output signal occurring at the output 18 of the monitor 16 indicates that a tested radiator has been found satisfactory, it is discharged there in the direction of the arrow 60 on the conveyor 38, but if a signal which indicates the presence of a leak is encountered, the tested radiator is discharged in the direction of the arrow 62 via the transverse conveyor belt 64 to the conveyor belt 66, where an inspection and repair station 68 is located for further inspection on the radiator in question and possible carrying out of repairs on it.

**Claims**

1. Process for checking the tightness of a casing (6), in which one fills the casing (6) with a gaseous medium; immerses it in a liquid medium present in a container (2); places the container ine a chamber of which the interior is insulated for a least sound and vibrations with frequencies relevant for the detection of a leak detects whether or not gas bubbles escape from the casing (6) by means of a sensor, which is in contact with a wall or wall part of the container and which converts vibrations thereof into electrical signals, processes and evaluates the output signals from the sensor by amplification, filtering and optionally by comparing with reference signals.

2. A device for carrying out the process according to Claim 1, comprising a container (2) to be filled with a liquid medium (4), which is provided with at least one wall (2a) or wall part (3) which is such that this can be brought into vibration by escaping gasbubbles (20), said wall (2a) or wall part (3) being connected to a vibration sensor (1) which converts vibrations thereof into corresponding electric signals, a signal processing circuit (12, 14, 16, 19) to which the signals from the sensor are supplied and which comprises a signalamplifier (12) and a circuit (16) for evaluating the output signal characterised in that the signal processing unit includes a bandpass filter (14) between signal amplifier (12) and circuit (16) and in that the container (2) is placed in a chamber (30) of which the inside is insulated for sound and vibrations with frequencies relevant for the leakdetection.

3. Device according to Claim 2, characterized in that the circuit for signal evaluation is adapted such that in use the level of the output signal is compared with a preset reference value.

4. Device according to Claim 2, characterized in that in the circuit for signal evaluation is adapted to compare amplitude and wave shape of the signal to amplitude and wave shape of a predetermined reference signal which simulates a leak.

5. Device according to one of Claims 2-4, characterized by three band-pass filters placed in the signal path and tuned to approximately 2, 4 and 8 kHz respectively.

6. Device according to one of Claims 3-5, characterized in that it is adapted such that ;in use; the output signal of the circuit for signal evaluation (16, 19) is converted (21) into a controlsignal determining the destination of the tested casing.

7. Device according to one of Claims 2-6, characterized in that at least one wall (2a) of the container is locally provided with a part (3) of smaller wall thickness to which the vibration sensor (8) is fixed.

8. Device according to one of Claims 2-7, in particular adapted for in series testing of casings such as radiators, heat exchangers and/or fuel tanks, characterized in that the chamber (30) is provided with a feed- and discharge aperture (52, 54) to which are connected a feed- and discharge belt (36, 38) respectively, which continue in the chamber into a support (46) which by lifting means (50) can be made to move in the vertical direction and into the container.

9. Device according to one of Claims 3-7, characterized in that in the chamber (30) means (40, 42, 44) are provided for connecting a casing (2) to be tested to a source of pressure medium.

**Patentansprüche**

1. Verfahren zum Prüfen der Dichtheit eines Behälters(6), in dem der Behälter (6) mit einem gasförmigen Medium gefüllt und in ein in einem Tank (2) befindliches flüssiges Medium getaucht wird, der in einer Kammer angeordnet wird, dessen Inneres mindestens gegen Schall und Schwingungen mit für das Erkennen eines Lecks relevanten Frequenzen isoliert ist; worauf mittels eines Sensors, der eine Wand oder einen Wandteil des Tanks berührt und Schwingungen der Wand bzw. des Wandteils in elektrische Signale umsetzt, festgestellt wird, ob dem Behälter (6) Gasblasen entweichen, und die Ausgangssignale des Sensors durch Verstärken, Filtern und gegebenenfalls einen Vergleich mit Bezugssignalen verarbeitet und ausgewertet werden.

2. Vorrichtung zum Durchführen des Verfahrens nach Anspruch 1 mit einem mit einem flüssigen Medium (4) zu füllenden Tank (2), der mit mindestens einer Wand (2a) oder mindestens einem Wandteil (3) versehen ist, die bzw. der so beschaffen ist, daß sie bzw. er durch entweichende Gasblasen (20) in Schwingungen versetzbar ist, und die (2a) bzw. (3) mit einem Schwingungssensor (1) verbunden ist, der Schwingungen der Wand bzw. des Wandteils in entsprechende elektrische Signale umsetzt, ferner mit einer Signalverarbeitungssschaltung (12, 14, 16, 19), der die von dem Sensor kommenden Signale zugeführt werden und die einen Signalverstärker (12) und eine Schaltung (16) zum Auswerten des Ausgangssignals umfaßt, dadurch gekennzeichnet, daß die Signalverarbeitungseinheit ein zwischen dem Signalverstärker (12) und der Schaltung (16) angeordnetes Bandfilter (14) besitzt und daß der Tank (2) in einer Kammer (30) angeordnet ist, deren Inneres gegen Schall und Schwingungen mit für das Erkennen eines Lecks relevanten Frequenzen isoliert ist.

3. Vorrichtung nach Anspruch 2, dadurch gekennzeichnet, daß die Schaltung zum Signalauswerten derart beschaffen ist, daß im Betrieb der Pegel des Ausgangssignals mit einem vorgegebenen Bezugswert verglichen wird.

4. Vorrichtung nach Anspruch 2, dadurch gekennzeichnet, daß die Schaltung zum Signalauswerten ausgebildet ist, die Amplitude und Wellenform des Signals mit der Amplitude bzw. Wellenform eines vorgegebenen , ein Leck simulierenden Bezugssignals zu vergleichen.

5. Vorrichtung nach einem der Ansprüche 2 bis 4, gekennzeichnet durch drei im Signalweg liegende Bandfilter, die auf etwa 2, 4 bzw. 8 kHz abgestimmt sind.

6. Vorrichtung nach einem der Ansprüche 3 bis 5, dadurch gekennzeichnet, daß sie so eingerichtet ist, daß im Betrieb das Ausgangssignal der Schaltung zum Signalsauswerten (16, 19) in ein den Bestimmungsort des zu prüfenden Gehäuses bestimmendes Steuersignal umgesetzt (21) wird.

7. Vorrichtung nach einem der Ansprüche 2 bis 6, dadurch gekennzeichnet, daß mindestens eine Wand (2a) des Tanks örtlich mit einem eine geringere Wandstärke besitzenden Teil (3) versehen ist, an dem der Schwingungssensor (8) befestigt ist.

8. Vorrichtung nach einem der Ansprüche 2 bis 7, die insbesondere für Reihenprüfungen von Behältern, wie Heizkörpern, Wärmetauschern und-/oder Kraftstofftanks, geeignet ist, dadurch gekennzeichnet, daß die Kammer (30) mit einer Ein- und einer Austragsöffnung (52, 54) versehen ist, mit der ein Eintrag- bzw. Austragsband (36, 38) verbunden sind, die sich in der Kammer in ein Auflager (46) fortsetzen, das durch eine Hebeeinrichtung (50) vertikal und in den Tank bewegbar ist.

9. Vorrichtung nach einem der Ansprüche 3 bis 7, dadurch gekennzeichnet, daß in der Kammer (30) eine Einrichtung (40, 42, 44) zum Verbinden eines zu prüfenden Behälters (2) mit einer Quelle eines Druckmediums vorgesehen sind.

**Revendications**

1.- Procédé pour contrôler l'étanchéité d'une enceinte (6), dans lequel on remplit l'enceinte (6) avec un fluide gazeux, on la plonge dans un fluide liquide présent dans un récipient (2), on place le récipient dans une chambre dont l'intérieur est isolé vis-à-vis au moins des sons et des vibrations avec des fréquences ayant rapport à la détection d'une fuite, on détecte si oui ou non des bulles de gaz s'échappent de l'enceinte (6) à l'aide d'un détecteur qui est en contact avec une paroi ou une partie de paroi du récipient et qui convertit ces vibrations en signaux électriques et on traite et on évalue les signaux de sortie en provenance du détecteur par amplification, filtrage et facultativement par comparaison avec des signaux de référence.

2.- Dispositif pour mettre en oeuvre le procédé selon la revendication 1, comprenant un récipient (2) à remplir avec un fluide liquide (4), récipient qui comporte au moins une paroi (2a) ou une partie de paroi (3) qui peut être amenée en vibrations par des bulles de gaz (20) s'échappant de l'enceinte, cette paroi (2a) ou cette partie de paroi (3) étant raccordée à un détecteur de vibrations (1) qui convertit ces vibrations en des signaux électriques correspondants, un circuit de traitement des signaux (12, 14, 16, 19) auxquels sont amenés des signaux en provenance du détecteur et qui comprend un amplificateur de signaux (12) et un circuit (16) pour évaluer le signal de sortie, caractérisé en ce que l'unité de traitement des signaux comporte un filtre passe-bande (14) entre l'amplificateur de signaux (12) et le circuit (16) et en ce que le récipient (2) est placé dans une chambre (30) dont l'intérieur est isolé vis-à-vis des sons et des vibrations avec des fréquences ayant rapport à la détection des fuites.

3.- Dispositif selon la revendication 2, caractérisé en ce que le circuit pour l'évaluation des signaux est adapté de telle sorte que, en utilisation, le niveau du signal de sortie est comparé à une valeur de référence prédéterminée.

4.- Dispositif selon la revendication 2, caractérisé en ce que le circuit pour l'évaluation des signaux est adapté pour comparer l'amplitude et la forme d'ondes du signal à l'amplitude et à la forme d'ondes d'un signal de référence prédéterminé qui simule une fuite.

5.- Dispositif selon l'une des revendications 2 à 4, caractérisé par trois filtres passe-bande. placés dans le trajet des signaux et accordés à environ 2,4 et 8 kHz respectivement.

6.- Dispositif selon l'une des revendications 3 à 5, caractérisé en ce qu'il est adapté de telle sorte que, en utilisation, le signal de sortie du circuit d'évaluation des signaux (16, 19) est converti (en 21) en un signal de commande déterminant la destination de l'enceinte contrôlée.

7.- Dispositif selon l'une des revendications 2 à 6, caractérisé en ce qu'au moins une paroi (2a) du récipient comporte localement une partie (3) ayant une épaisseur de paroi plus faible sur laquelle est fixé le détecteur de vibrations (8).

8.- Dispositif selon l'une des revendications 2 à 7, en particulier adapté pour contrôler en série des enceintes telles que des radiateurs, des échangeurs thermiques et/ou des réservoirs de combustible, caractérisé en ce que la chambre (30) comporte une ouverture d'amenée (52) et une ouverture d'évacuation (54) auxquelles sont raccordées respectivement une bande d'amenée (36) et une bande d'évacuation (38), se continuent dans la chambre en un support (46) qui, par des moyens de levée (50), peut se déplacer dans la direction verticale et dans le récipient.

9.- Dispositif selon l'une des revendications de 3 à 7, caractérisé en ce que des moyens (40, 42, 44) sont prévus dans la chambre (30) pour raccorder une enceinte (2) à contrôler à une source de fluide sous pression.

FIG.1a.

FIG.1.

EP 0 390 232 B1

EP 0 390 232 B1

Fig. 2.

FIG. 3.